(19) Europäisches Patentamt

European Patent Office

Office européen des brevets

(11) EP 0 375 806 B1

(12) EUROPEAN PATENT SPECIFICATION

(45) Date of publication and mention
of the grant of the patent:
19.06.1996  Bulletin 1996/25

(51) Int Cl.6: G06T 5/30

(21) Application number: 88121904.2

(22) Date of filing: 30.12.1988

(54) **Image processing method**

Bildverarbeitungsverfahren

Méthode de traitement de images

(84) Designated Contracting States:
BE DE FR GB IT NL SE

(43) Date of publication of application:
04.07.1990  Bulletin 1990/27

(73) Proprietors:
• YOZAN INC.
  Tokyo 155 (JP)
• SHARP KABUSHIKI KAISHA
  Osaka 545 (JP)

(72) Inventor: Kumagai, Ryohei
Bunkyo-ku Tokyo 112 (JP)

(74) Representative: Grünecker, Kinkeldey,
Stockmair & Schwanhäusser Anwaltssozietät
Maximilianstrasse 58
80538 München (DE)

(56) References cited:
EP-A- 0 154 449

• COMMUNICATIONS OF THE ACM, vol. 30, no. 2, February 1987, pages 156-160, New York, US; C.M. HOLT et al.: "An improved parallel thinning algorithm"
• COMPUTER VISION, GRAPHICS AND IMAGE PROCESSING, vol. 40, no. 1, october 1987, pages 30-40, Academic Press, Inc., Duluth, MN, US; R.T. CHIN et al.: "A one-pass thinning algorithm and its parallel implementation"
• PATTERN RECOGNITION, vol. 17, no. 3, 1984, pages 279-284, Pergamon Press, Ltd, Oxford, GB; N.J. NACCACHE et al.: "An investigation into the skeletonization approach of hilditch"

## Description

## BACKGROUND OF THE INVENTION

The present invention relates to an image processing method of thinning.

In the microscopic image of a metal crystal, the crystal interface appears as a line with width more than one pixel. For analyzing crystal such as particle size analysis, the line of crystal interface should be thinned to a width of one pixel. In this thinning, the continuity of the line should be maintained because adjacent particles are joined together when the interface is partially broken. According to the above or other demands in various technical fields, the minimal performance the thinning method should perform is established as follows;

(1) Thinned width is a width of one pixel.
(2) Thinned line is positioned substantially on the middle of the original line.
(3) The continuity of the original line is maintained.
(4) The length of the original line is substantially maintained.
(5) Convexity and/or concavity do not generate spikes.
(6) The thinned line is not deformed on the crossing portion.

The performances (1) to (4) are called basical performances.

As a thinning method, Hilditch method is well known because of its high quality of the process result. However, Hilditch method has disadvantage of low process speed because in the method not only the connectedness of the current pixel but also connectednesses of the neighbor pixels around the current pixel are evaluated.

In an article written by R. T. Chin et al., "A one-pass thinning algorithm and its parallel implementation", COMPUTER VISION, GRAPHICS AND IMAGE PROCESSING, vol. 40, no. 1, October 1987, pages 30-40, Academic Press Inc., Duluth, MN, US, thinning algorithms are classified into sequential thinning operating on one pixel at a time and whose operation depends on preceding processing results, and into parallel thinning operating on all pixels simultaneously. Furthermore, by applying two Restoring Templates, it is avoided that objects that are two pixels wide will disappear completely.

## SUMMARY OF THE INVENTION

The present invention has an object to provide an image processing method for thinning of high process speed as well as high quality of the process result as set out in the appended claim.

## BRIEF DESCRIPTION OF DRAWINGS

Fig. 1 shows an end point and isolate point of a image;
Fig. 2 shows a configuration from which a spike can be generated through the process of thinning;
Fig. 3 shows a spike generated in the configuration of Fig. 2;
Fig. 4 (a) shows a two pixels line perpendicular to the scan line;
Fig. 4 (b) shows a two pixels line parallel to the scan line;
Fig. 5 shows an 3x3 convolution to be processed by the first rule;
Fig. 6 to 9 show 3x3 convolutions to be processed by the second to fifth rules, respectively;
Fig. 10 (a) shows a process result of the two pixels line perpendicular to the scan line;
Fig. 10 (b) shows a process result of the two pixels line parallel to the scan line;
Fig. 11 (a) shows a two pixels line perpendicular to the scan line to which one pixel is attached;
Fig. 11 (b) shows a two pixels line parallel to the scan line to which one pixel is attached;
Fig. 12 (a) shows the process result of the configuration in Fig. 11 (a);
Fig. 12 (b) shows the process result of the configuration in Fig. 11 (b); and
Fig. 13 shows a 3x3 convolution with references for explaining the connectedness;

## DETAILED DESCRIPTION OF THE PREFERRED EMBODIMENT

A preferred embodiment of the present invention is described detailedly, hereinafter.

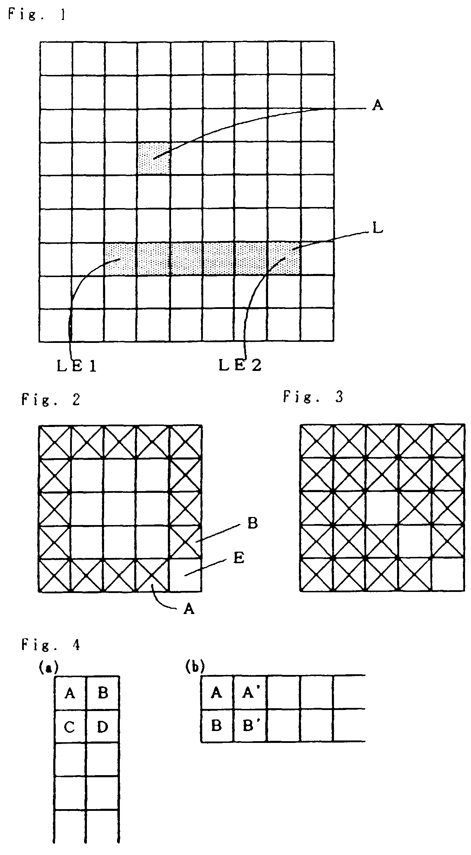

An isolate point A with a size of one pixel and a line L with a width of one pixel, as shown in Fig. 1, must be maintained in thinning process because they themselves are the thinning result. If one or more pixels of such configurations are deleted, the characteristics of the configurations are changed. If a rule is applied that the end points LE1 and LE2 are to be changed to background pixels, the line L will be at last distinguished. Therefore, the isolate pixel and end pixel should be maintained in the thinning process.

When a pixel is only a juncture connecting a plurality of configurations with one another, the topology of the total configuration is changed if the pixel is deleted. It is possible to judge whether a pixel is such juncture or not by evaluating the number of connectedness in $N_8$ connectedness. When a pixel is such a juncture, the number of connectedness is not less than two. Therefore, a pixel with a number of connectedness not less than two should not be changed to background pixel in order to maintain the characteristics of a configuration.

The number of connectedness $N_8$ is calculated with respect to 8 connectedness as follows:

$$N_8 = (\overline{P_k} \cdot \overline{P_k} \ \overline{P_{k+1}} \ \overline{P_{k+2}})$$

$$k = 0, 2, 4, 6$$

$$\overline{P_k} = 1 - P_k$$

where, the center pixel of 3x3 convolution is processed, the right neighbor of the center pixel is $P_0$, and the suffix of the pixel around the center pixel increases anticlockwisely.

In Fig. 2, there is shown a square processed one time for thinning. By the process one time, boundary pixels of a configuration are changed to background pixel (shown by x) according to various rules. Boundary pixels have for example a density of "0", the pixels of a configuration has for example a density of "1".

When a scan line advances rightwardly and is generated after upper scan lines, the lower right boundary pixel E of the square, that is, the pixel finally scanned of a configuration becomes end point after other boundary pixels have already been processed. According to the rule with respect to the end point above, the end point cannot be deleted. Therefore, pixels upper left neighbor of the pixel E is also remained, then a spike extending down-and rightwardly is generated.

For preventing the above spike due to end point judgment, the present invention applies parallel processing for end point judgment. Parallel processing means that in each process cycle the neighbor pixels around the pixel to be processed are evaluated by the density before that process cycle. In Fig. 2, the deleted pixels indicated by x are evaluated by the density before deletion. In this evaluation, the lower left pixel E has upper and left neighbors so as not to be deemed to be an end point. Then the pixel E is changed to background pixel and the spike can not be generated.

The opposite of the parallel processing is sequential processing, in which each pixel is evaluated by the density given in that process cycle.

The parallel processing for end point has a disadvantage. A line parallel or perpendicular to the scan line with width of two pixel is deleted by parallel processing above.

In Fig. 4 (a), the upper left point A of the line perpendicular to the scan line with a width of two pixel is not the isolate or end point and has number of connectedness of "1", as well as it is boundary pixel. The pixel A is to be deleted according to the end point judgment above. The right neighbor B of the pixel A is also deleted because the pixel A is deemed to be remained in the parallel processing. Similarly, left point C and the right neighbor D thereof are deleted in the lower line by parallel processing. The line perpendicular to the scan line with the width of two pixels is at last deleted in parallel processing, as will be understood from the description above.

A line parallel to the scan line with a width of two pixels is shown in Fig. 4 (b). The pixels A, A',... in the upper line are deleted through parallel processing because they have lower neighbors. The pixel B, B',... in the lower line are deleted through parallel processing because the upper line is deemed to be remained. So the line in Fig. 4 (b) is at last deleted through parallel processing.

Rules for processing a two pixel line parallel or perpendicular to the scan line are proposed by the present invention, as follows;

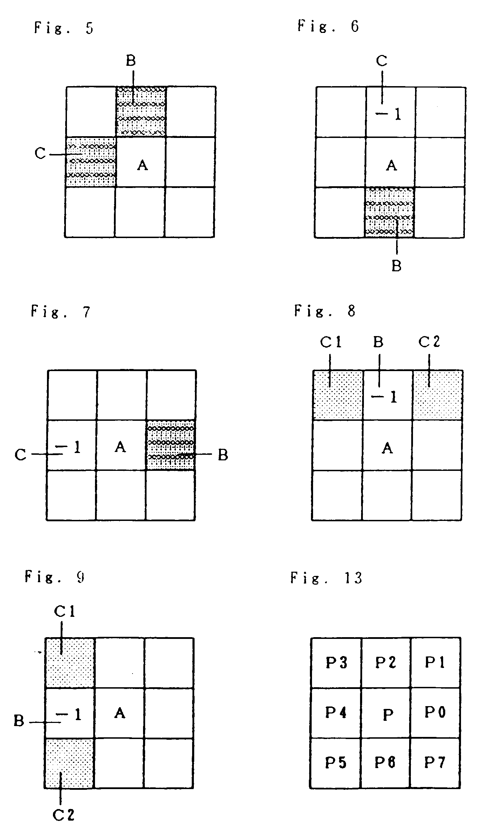

a- i) In a 3x3 convolution, when the upper and left neighbor of the center pixel A are background pixels, the center pixel A is given an index density. The index density is a density different from the density to be given to a pixel in a configuration or background. The index density may "-1", for example, as shown in Fig. 5.

a- ii) When the center pixel A in a 3x3 convolution in Fig. 6 is not processed by the rule a-i, the center pixel is processed so that the center pixel remains a configuration pixel when the upper neighbor C is an indexed pixel and the lower neighbor A is a background pixel in the meaning of sequential processing.

a-iii) When the center pixel A in a 3x3 convolution in Fig. 7 is not processed by neither the rules a-i nor a-ii, the center pixel A is processed so that it remains a configuration pixel when the left neighbor C is an indexed pixel and the right neighbor B is a background pixel in the meaning of sequential processing.

a- iv) When the center pixel A in a 3x3 convolution in Fig. 8 is not processed by neither the rules from a-i to a-iii, the center pixel A is processed so as to be given an index density when the upper neighbor B is indexed pixel in the meaning of sequential processing and both of the right and left neighbors C1 and C2 are background pixels in the meaning of parallel processing.

a- v) When the center pixel A in a 3x3 convolution in Fig. 9 is not processed by neither of the rules from a-i to a-iv, the center pixel A is processed so as to be given an index density when the left neighbor B is indexed pixel in the meaning of sequential processing and both of the upper and lower neighbors C1 and C2 are background pixels in the meaning of parallel processing.

The pixel given the indexed density in one process cycle is changed to background pixel in the next process cycle.

The above rules from a-i to a-v are applicable for the case that a scan line advances rightwardly and is generated after upper scan lines.

The rules are generalized for any manners of scan lines, as described in b-i to b-v.

b- i) When a pixel to which the current pixel follovs along the scan line is a background pixel or an indexed pixel, in the meaning of parallel processing, as well as, when a pixel on the previous scan line and positioned corresponding to the current pixel is a background pixel or an indexed pixel in the meaning of parallel processing, the current pixel is given an index density.

b- ii) When the current pixel is not processed according to the rule b-i, when the pixel on the previous scan line and positioned corresponding to the current pixel is an indexed pixel in the meaning of the sequential processing, as well as when the pixel on the following scan line and positioned corresponding to the current pixel is a background pixel in the meaning of sequential processing, the current pixel remains a configuration pixel.

b-iii) When the current pixel is not processed according to the rules b-i or b-ii, when the pixel preceding said current pixel in the same scan line is an indexed pixel in the meaning of sequential processing, and if the subsequent pixel of the same scan line is a background pixel, the current pixel remains a configuration pixel.

b- iv) When the current pixel is not processed according to the rules b-i, b-ii or b-iii, when the pixel on the previous scan line and positioned corresponding to the current pixel is an indexed pixel in the meaning of sequential processing, as well as, when the pixel to which the current pixel follows and the pixel following to the current pixel along the scan line are background pixels, the current pixel is given a index density.

b- v) When the current pixel is not processed according to the rules b-i, b-ii, b-iii or b-iv, when the pixel to which the current pixel follows is an indexed pixel along the scan line in the meaning of sequential processing, as well as, when the pixel on the previous and the following scan lines and positioned corresponding to the current pixel are background pixels, the current pixel is given a index density.

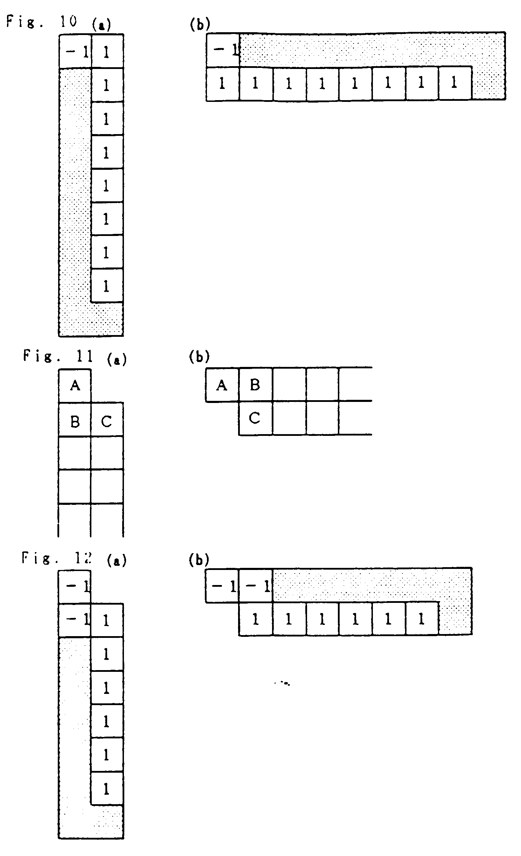

The processings according to the rules a-i to a-v are described, hereinafter, referring to Figs 10 to 12.

The configuration in Fig. 10 (a) is a two pixels vertical line and is to be processed by the rules a-i and a-ii. First, the upper left end pixel is processed to be given an index density, such as "-1", according to the rule a-i. The right neighbor of the first pixel is processed to be maintained as it is, according to the rule a-ii. Therefore, the vertical two pixel line is processed in thinning to be a one pixel line consisting of the right side pixels except for the bottom pixel.

The configuration in Fig. 10 (b) is a two pixel horizontal line and is to be processed by the rules a-i and a-ii. First, the upper left end pixel is processed to be given an index density, such as "-1", according to the rule a-i. The pixels on the upper line are deleted except for the left end pixel above. One the lower line, the left end pixel is remained as it is according to the rule a-ii. The pixels other than the left end pixel are remained as they are. Therefore, the pixels on the lower line are remained except for the right end pixel.

The configuration in Fig. 11 (a) consists of a two pixels vertical line and a pixel A attached from upward to the upper left end pixel of the two pixel line. If the rules above are not applied to this configuration, the pixel A is deleted because the pixel is not an end point, having lower neighbors B and C. On processing the two pixels line, the left end pixel B is deleted because the upper neighbor A is deemed to exist. The pixel C and other pixels are deleted due to parallel processing. Finally the total configuration is deleted.

For prevent this deletion, the pixel A is given an index density according to the rule a-i, the pixel B is also given the index density according to the rule a-iv. By this processing, the configuration is processed to be a one pixel line consisting of right side pixels except for the right bottom pixel.

A configuration consisting of a two pixels vertical line and a pixel attached from upward to the upper right end pixel of the line can be processed similarly to the above.

The configuration of Fig. 11 (b) consists of a horizontal two pixels line and one pixel A attached from leftward to the upper left end pixel of the line. If the rule above are not applied to this configuration, the pixel A is deleted because the pixel is not an end pixel, having right neighbors B and C. On processing the two pixels line, the pixel B is deleted because the left neighbor is deemed to exist. Then the total pixels on the upper line are deleted. As for the lower line, the left end pixel C is deleted because the upper left neighbor A is deemed to exist. Then the total pixels on the lower line are deleted. So the two pixels line is at last completely deleted.

For prevent this deletion, the pixel A is given an index density according to the rule a-i, as shown in Fig. 12 (b). The pixel B is also given an index density. Therefore, the configuration is processed in thinning to be a configuration consisting of lower one pixel line except for the right end pixel.

As mentioned above, since a two pixels line is thinned to be one pixel line without generating a spike, the thinning performance is excellent. The process speed is high because one boundary layer is processed in on process cycle.

In the embodiment above, one group in a binary image is processed. In the labeled image, each group can be independently processed or one of the groups can be selectively processed.

**Claims**

1. A binary image processing method for thinning a configuration comprised of pixels, said thinning being achieved by convolutions performed on a window moved over the configuration to be processed, whereby said thinning is normally performed according to sequential processing and only in cases of end pixels according to parallel processing, whereby parallel processing means that whenever a pixel intensity value is modified, this modified value is taken into account only in the subsequent processing cycle for the whole configuration whereas sequential processing means that a modified pixel intensity value is taken into account also for subsequent convolutions within the present processing cycle for the whole configuration, and

wherein deletion of two pixel wide lines is avoided, said method being characterized by defining an indexed pixel intensity value other than configuration or background pixel intensity, such that indexed pixels are changed to background pixels within the next processing cycle for the whole configuration, said method being further characterized by the application of the following rules :

a current configuration pixel is changed to an indexed pixel if the pixel preceding said current pixel in the same scan line is a background pixel or an indexed pixel in the sense of parallel processing and if the corresponding pixel of the previous scan line is a background pixel or an indexed pixel in the sense of parallel processing (Fig. 5),

a current pixel not already processed by the above rule remains a configuration pixel if the corresponding pixel of the previous scan line is an indexed pixel in the sense of sequential processing and if the corresponding pixel of the subsequent scan line is a background pixel in the sense of sequential processing (Fig. 6),

a current pixel not already processed by the above rule remains a configuration pixel if the pixel preceding said current pixel in the same scan line is an indexed pixel in the sense of sequential processing and if the subsequent pixel of the same scan line is a background pixel in the sense of sequential processing (Fig. 7),

a pixel not already processed by one of the above rules is changed to an indexed pixel if the corresponding pixel in the previous scan line is an indexed pixel in the sense of sequential processing and if the preceding pixel and the subsequent pixel to that indexed pixel of the previous scan line are background pixels in the sense of parallel processing (Fig. 8), and

a pixel not already processed by one of the above rules is changed to an indexed pixel if the preceding pixel of the same scan line is an indexed pixel in the sense of sequential processing and if the respective corresponding pixels to said indexed pixel within the previous and subsequent scan lines are background pixels in the sense of parallel processing (Fig. 9).

**Patentansprüche**

1. Binäres Bildverarbeitungsverfahren zum Ausdünnen einer aus Pixel bestehenden Konfiguration, wobei das Ausdünnen durch Faltungen in einem Fenster, welches über die zu verarbeitende Konfiguration bewegt wird, erreicht wird und wobei das Ausdünnen normalerweise sequentiell und nur im Falle von End-Pixel parallel erfolgt, wobei parallele Verarbeitung bedeutet, daß ein Pixelintensitätswert modifiziert wird und dieser modifizierte Wert nur für einen nachfolgenden Verarbeitungszyklus für die gesamte Konfiguration verwendet wird, wohingegen sequentielle Verarbeitung bedeutet, daß ein modifizierter Pixelintensitätswert auch für nachfolgende Faltungen innerhalb des vorliegenden Verarbeitungszyklus für die gesamte Konfiguration berücksichtigt wird, und wobei das Löschen von zwei Pixelbreitenlinien vermieden wird,

gekennzeichnet durch das Definieren einer Index-Pixelintensität, die sich von einer Pixelintensität für die Konfiguration oder für Hintergrund unterscheidet, derart, daß Index-Pixel zu Hintergrundpixel innerhalb des nächsten Verarbeitungszyklus für die gesamte Konfiguration verändert werden und wobei das Verfahren weiterhin die Anwendung folgender Regeln vorsieht:

ein momentaner Konfigurations-Pixel wird in einen Index-Pixel verändert, wenn der vorhergehende Pixel in der gleichen Abtastzeile ein Hintergrundpixel oder ein Index-Pixel im Sinne paralleler Verarbeitung ist und falls der entsprechende Pixel der vorhergehenden Abtastzeile ein Hintergrundpixel oder ein Index-Pixel im Sinne paralleler Verarbeitung ist (Fig. 5),

ein momentaner Pixel, der noch nicht nach obiger Regel verarbeitet wurde, bleibt ein Konfigurationspixel, wenn der entsprechende Pixel in der vorhergehenden Abtastzeile ein Index-Pixel im Sinne sequentieller Verarbeitung ist und falls der entsprechende Pixel in der nachfolgenden Abtastzeile ein Hintergrundpixel im Sinne sequentieller Verarbeitung ist (Fig. 6),

ein momentaner Pixel, der nicht bereits nach obiger Regel verarbeitet wurde, bleibt ein Konfigurationspixel, wenn der vorhergehende Pixel in der gleichen Abtastzeile ein Index-Pixel im Sinne sequentieller Verarbeitung ist und wenn der nachfolgende Pixel der gleichen Abtastzeile ein Hintergrundpixel im Sinne sequentieller Verarbeitung ist (Fig. 7),

ein Pixel, der noch nicht nach einer der obigen Regeln verarbeitet wurde, wird in einen Index-Pixel verändert, wenn der entsprechende Pixel in der vorhergehenden Abtastzeile ein Index-Pixel im Sinne sequentieller Verarbeitung ist und falls der vorhergehende Pixel und der nachfolgende Pixel zu dem Index-Pixel in der vorhergehenden Abtastzeile Hintergrundpixel im Sinne paralleler Verarbeitung (Fig. 8) sind, und

ein Pixel, der noch nicht nach einer der vorhergehenden Regeln verändert wurde, wird zu einem Index-Pixel gemacht, wenn der vorhergehende Pixel in der gleichen Abtastzeile ein Index-Pixel im Sinne sequentieller Verarbeitung ist und wenn die entsprechenden Pixel zum Index-Pixel innerhalb der vorhergehenden und nachfolgenden Abtastzeile Hintergrundpixel im Sinne paralleler Verarbeitung sind (Fig. 9).

**Revendications**

1. Méthode de traitement d'images en binaire pour amincir une configuration constituée d'éléments d'image, ledit amincissement étant réalisé par des convolutions exécutées sur une fenêtre déplacée au-dessus de la configuration à traiter, ledit amincissement étant ainsi exécuté normalement selon un traitement séquentiel et uniquement dans les cas d'éléments d'image d'extrémité selon un traitement en parallèle, ce traitement en parallèle signifiant ainsi que chaque fois qu'une valeur d'intensité d'élément d'image est modifiée, cette valeur modifiée n'est prise en compte que dans le cycle de traitement suivant pour toute la configuration alors que le traitement séquentiel signifie qu'une valeur d'intensité d'élément d'image modifiée est prise en compte également pour les convolutions suivantes au cours du présent cycle de traitement pour toute la configuration, et dans laquelle l'effacement de deux lignes de la largeur d'un élément d'image est évité,

ladite méthode étant caractérisée par la définition d'une valeur d'intensité d'élément d'image indexée autre que l'intensité d'un élément d'image de la configuration ou du fond, de telle sorte que les éléments d'image indexés sont changés en éléments d'image de fond au cours du cycle de traitement suivant pour toute la configuration, ladite méthode étant en outre caractérisée par l'application des règles suivantes :

un élément d'image de configuration présent est changé en un élément d'image indexé si l'élément d'image précédant l'élément d'image présent sur la même ligne de balayage est un élément d'image de fond ou un élément d'image indexé dans le sens d'un traitement en parallèle et si l'élément d'image correspondant de la ligne de balayage précédente est un élément d'image de fond ou un élément d'image indexé dans le sens d'un traitement en parallèle (Figure 5),

un élément d'image présent non déjà traité par la règle ci-dessus reste un élément d'image de configuration si l'élément d'image correspondant de la ligne de balayage précédente est un élément d'image indexé dans le sens d'un traitement séquentiel et si l'élément d'image correspondant de la ligne de balayage suivante est un élément d'image de fond dans le sens d'un traitement séquentiel (Figure 6),

un élément d'image présent non déjà traité par la règle ci-dessus reste un élément d'image de configuration si l'élément d'image précédant ledit élément d'image présent sur la même ligne de balayage est un élément d'image indexé dans le sens d'un traitement séquentiel et si l'élément d'image suivant de la même ligne de balayage est un élément d'image de fond dans le sens d'un traitement séquentiel (Figure 7),

un élément d'image non déjà traité par l'une des règles ci-dessus est changé en un élément d'image indexé si l'élément d'image correspondant sur la ligne de balayage précédente est un élément d'image indexé dans le sens d'un traitement séquentiel et si l'élément d'image précédent et l'élément d'image suivant par rapport à cet élément d'image indexé de la ligne de balayage précédente sont des éléments d'image de fond dans le sens d'un traitement en parallèle (Figure 8), et

un élément d'image non déjà traité par l'une des règles ci-dessus est changé en un élément d'image indexé si l'élément d'image précédent de la même ligne de balayage est un élément d'image indexé dans le sens d'un traitement séquentiel et si les éléments d'image correspondants respectifs par rapport audit élément d'image indexé sur les lignes de balayage précédente et suivante sont des éléments d'image de fond dans le sens d'un traitement en parallèle (Figure 9).

Fig. 1

Fig. 2

Fig. 3

Fig. 4

(a)

| A | B |
|---|---|
| C | D |
|   |   |
|   |   |

(b)

| A | A' |   |   |
|---|----|---|---|
| B | B' |   |   |

Fig. 5

Fig. 6

Fig. 7

Fig. 8

Fig. 9

Fig. 13

Fig. 10  (a)          (b)

Fig. 11  (a)          (b)

Fig. 12  (a)          (b)